# DEMANDE DE BREVET EUROPEEN

(11) **EP 1 323 366 A2**
(43) Date de publication de la demande: **02.07.2003**
(21) Numéro de dépôt: 02028912.0
(22) Date de dépôt: 23.12.2002
(51) Int. Cl.: A47J 31/06

(54) **Porte-filtre à café**

(30) Priorité: 24.12.2001 FR 0116813; 19.03.2002 FR 0203358; 25.04.2002 FR 0205218
(71) Demandeur: Ph. et M.-C. Carasso-Bossert S.A., 1227 Carouge (CH)
(72) Inventeur: Carasso, Philippe, 1242 Satigny (CH); Schindler, Claude, 1206 Geneve (CH)
(74) Mandataire: Grosfillier, Philippe

(57) **Abrégé**

Porte-filtre à café ayant une chambre à infusion dont le fond comporte une ouverture (9) permettant l'écoulement de l'extrait de café et comprend un filtre pour le café. Il comporte au moins des moyens mobiles (5) de fermeture du filtre (4) et des moyens de pression (6) agissant sur lesdits moyens de fermeture du filtre de façon à permettre le retrait desdits moyens de fermeture et l'écoulement de l'extrait de café lorsqu'une pression déterminée est atteinte dans le filtre.

## Description

La présente invention concerne un porte-filtre à café ayant une chambre à infusion dont le fond comporte une ouverture permettant l'écoulement de l'extrait de café, et avec un filtre pour le café ayant un fond percé.

La présente invention concerne également une machine à café comprenant un tel porte-filtre à café.

Des portes-filtre à café sont connus dans l'état de la technique. A titre d'exemple, la demande internationale PCT N° WO 97/39668, dont le contenu est incorporé par référence dans la présente demande, décrit un porte-filtre pour préparer une tasse de café ayant une couche de mousse. L'assemblage comprend un porte-filtre dont le fond comporte au moins une ouverture d'écoulement et un filtre à café. L'assemblage connu est caractérisé en particulier par le fait qu'il comprend, d'une part, un filtre en papier au travers duquel le café s'écoule hors du filtre et une plaque de séparation ayant au moins une ouverture d'écoulement, ladite plaque étant située entre le côté inférieur du filtre et le fond du porte-filtre. Cette machine fonctionne de la manière suivante. L'eau chaude est amenée dans le porte-filtre et mouille le café moulu se trouvant dans le filtre. Comme le filtre à café comprend un filtre en papier, l'eau chaude va s'écouler à travers le filtre à café sans monter en pression dans le filtre à café. Par la plaque de séparation, une pression élevée est créée dans l'espace compris entre la plaque de séparation et le filtre à café. L'extrait de café est forcé au travers des ouvertures de la plaque de telle façon que des bulles sont formées dans l'espace situé de l'autre côté de la plaque de séparation par rapport au filtre à café.

La demande de brevet européen N° 0 459 323, dont le contenu est incorporé par référence dans la présente demande, décrit un porte-filtre pour machine à café du type "expresso". Ce porte-filtre comprend une coupelle de réception d'un filtre à café dont le fond est perforé, une chambre collectrice d'infusion comportant un couloir dont le débouché communique avec un entonnoir de distribution. En outre, le porte-filtre décrit comprend un dispositif de confection de mousse constitué d'une lame flexible disposée transversalement au débouché, dont une extrémité est ancrée dans la chambre et l'autre extrémité est appliquée avec une certaine force contre ledit débouché de façon à obtenir un jet d'infusion uniquement lorsque la pression dans la chambre est supérieure à la force d'application de l'extrémité libre de la lame contre le débouché, ainsi qu'une cloison agencée autour de la lame et s'étendant vers le bas de sorte que le jet d'infusion vienne se pulvériser sur la cloison en formant de la mousse.

Le brevet européen N° 0 749 283, dont le contenu est incorporé par référence dans la présente demande, finalement décrit une capsule de filtre à café pour machine du type "expresso". Dans cette capsule, on a formé une chambre de pression entre deux plaques, l'une des plaques étant constituée par la plaque filtre de la capsule. La pression est créée par la présence de trous dont la petite dimension s'oppose à l'écoulement de l'extrait de café, formant ainsi cette chambre de pression.

Le but de l'invention est d'améliorer les dispositifs connus.

Plus particulièrement, l'invention a pour but de créer un porte-filtre à café générant une mousse de qualité et durable, ledit porte filtre étant à la fois simple à fabriquer, à monter et à démonter pour permettre son nettoyage.

Selon un premier mode, le porte-filtre comprend au moins des moyens mobiles de fermeture du fond, des moyens de pression agissant sur lesdits moyens de fermeture du fond de façon à permettre le retrait desdits moyens de fermeture et l'écoulement de l'extrait de café lorsqu'une pression déterminée est atteinte dans filtre.

De préférence, lesdits moyens mobiles de fermeture comprennent une première plaque et lesdits moyens de pression comprennent au moins un élément ressort. La première plaque peut comporter au moins une ouverture. Selon une variante, la première plaque comprend plusieurs ouvertures réparties sur sa circonférence.

Le porte-filtre peut comprendre une deuxième plaque comportant au moins une ouverture, ledit moyen de pression agissant entre ladite deuxième plaque et ladite première plaque. De préférence, les ouvertures ont une forme de venturi.

La plaque peut éventuellement comporter au moins une rainure concentrique sur sa face opposée au réceptacle à café. De plus, le réceptacle à café peut être un filtre réutilisable ou une dose de café préconditionnée jetable, comme par exemple une capsule.

Selon un autre mode d'exécution, le fond de la chambre à infusion est muni d'une plaque s'appuyant sur une protubérance centrale et laissant des passages entre ladite plaque et la paroi intérieure de la chambre à infusion pour l'écoulement de l'extrait de café, ladite plaque étant montée dans ladite chambre à infusion de sorte qu'elle puisse basculer par rapport à ladite protubérance dans une direction approximativement parallèle à l'axe de la chambre à infusion, les dimensions du filtre laissant un jeu entre sa surface latérale et la paroi intérieure de la chambre à infusion tandis que la hauteur du filtre est prévue pour que le filtre subisse une compression lorsque l'ensemble porte-filtre et filtre est monté sur la machine et que ladite enveloppe formant le filtre est faite d'un matériau déformable élastiquement

La partie du filtre opposée au fond du filtre peut être munie d'un épaulement destiné à venir s'appuyer sur une surface annulaire du porte-filtre lorsque ils sont montés sur la machine et qu'un jeu subsiste entre ladite surface annulaire et l'épaulement avant que l'ensemble porte-filtre et filtre soit monté sur la machine. Cette variante d'exécution permet de créer lors de la mise en place du porte-filtre et filtre sur la machine un joint étanche par l'écrasement du filtre entre la machine à café et le porte-filtre, l'épaulement assurant l'étanchéité entre la surface annulaire du porte filtre et la machine.

Selon une variante d'exécution, la plaque comprend au moins une projection venant se loger dans une saignée annulaire du fond de la chambre à infusion dont le diamètre est supérieur au diamètre de ladite chambre à infusion pour empêcher ainsi que la plaque quitte le fond de la chambre à infusion de manière intempestive. En effet, comme la plaque n'est pas fixée sur la protubérance, il faut qu'elle puisse rester prisonnière au fond de la chambre à infusion, notamment lors du nettoyage ou lorsque le porte-filtre est retourné à l'envers, par exemple dans un égouttoir.

Selon une autre variante, la chambre à infusion comprend au moins une fraisure longitudinale sur sa surface intérieure dont les dimensions et la forme correspondent à celles de la projection de ladite plaque afin de permettre la mise en place de la plaque au fond de la chambre à infusion. En effet, pour pouvoir introduire la plaque dans la chambre à infusion il faut prévoir au moins une fraisure pour faire glisser la plaque au fond de la chambre à infusion en utilisant la fraisure longitudinale comme guide pour la projection de ladite chambre à infusion. Une fois qu'on arrive au fond, il suffit de tourner la plaque de quelques degrés afin que la plaque ne puisse plus glisser accidentellement à l'extérieur de la chambre à infusion tout en restant libre de basculer par rapport à la protubérance.

Selon une autre variante, la protubérance est munie de moyens pour pouvoir régler la position de ladite plaque par rapport à la protubérance.

Selon une autre variante, le filtre est une capsule contenant une dose de café fermée à sa face opposée au fond du filtre par une couche d'un matériau permettant à l'eau de traverser.

Enfin, selon une autre variante, le filtre est un filtre réutilisable, c'est-à-dire qu'il suffit d'introduire chaque fois la quantité de café souhaitée dans le filtre et confectionner le café comme c'est souvent le cas dans les machines connues utilisant un filtre métallique.

Selon un autre mode d'exécution, le porte-filtre comporte au moins des moyens déformables de fermeture du fond du filtre en contact avec ledit fond, des moyens de support coopérant avec lesdits moyens de fermeture du fond du filtre de façon à permettre la déformation desdits moyens de fermeture et l'écoulement du café lorsqu'une pression déterminée est atteinte dans le filtre.

Les moyens déformables de fermeture comprennent de préférence une plaque et les moyens de support sont formés par une portée dans la chambre à infusion et au moins deux projections latérales sur la plaque.

De préférence, la plaque comprend trois projections latérales réparties de façon équidistante sur la périphérie de la plaque et s'appuyant sur la portée de chambre à infusion.

Le filtre qui forme le réceptacle à café peut être une capsule, jetable ou non, ou encore un filtre réutilisable.

Les avantages du système selon l'invention sont nombreux. Notamment, l'on a une construction très simple qui effectivement produit une mousse de qualité en laminant l'extrait de café au moins à une reprise, voire même plus en fonction du mode d'exécution. Le système est aussi très fiable et ne s'encrasse pas facilement. De plus, le volume dans lequel l'extrait de café est mis sous pression avant de pouvoir s'échapper du porte-filtre est plus important que dans les systèmes déjà connus dans l'état de la technique, de sorte que la génération de mousse en est encore améliorée.

L'invention sera mieux comprise par la description de plusieurs mode d'exécution de celle-ci et des figures qui s'y rapportent.
La figure 1 représente une vue coupe d'un premier mode d'exécution d'un porte-filtre selon l'invention;
la figure 2 représente une vue de dessus du porte-filtre de la figure 1, mais sans filtre;
la figure 3 représente deux variantes vues de dessus d'une plaque mobile selon l'invention,
la figure 4 représente une troisième variante de plaque mobile dans un porte-filtre en coupe selon l'invention;
la figure 5 représente un deuxième mode d'exécution d'un porte-filtre selon l'invention, vu en coupe;
la figure 6 représente deux variantes, vues de dessous, d'une plaque fixe selon l'invention et
la figure 7 représente différentes formes de trous de la plaque fixe, en coupe partielle.
La figure 8 représente une vue coupe d'un autre mode d'exécution du porte-filtre selon l'invention;
La figure 9 est une vue en coupe de la figure 8 selon la ligne II-II.
Les figures 10A à 10D sont une représentation schématique de la déformation du filtre lors de la confection d'un café.
La figure 11 représente une vue coupe d'un mode autre d'exécution du porte-filtre selon l'invention;
la figure 12 représente une vue de dessus du porte-filtre de la figure 11, sans filtre à café;
la figure 13 représente une vue de dessus d'un mode d'exécution de plaque déformable selon le mode de la figure 11.

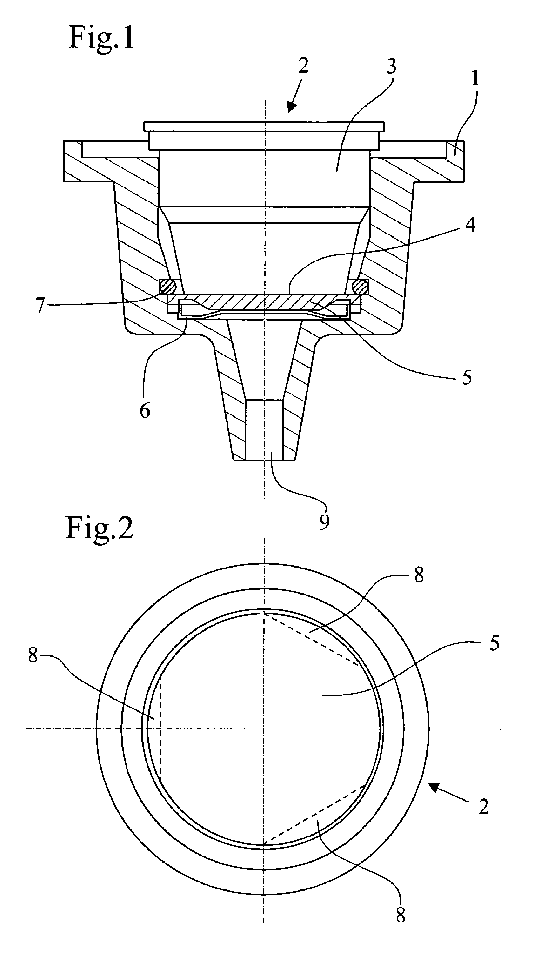

Le premier mode d'exécution de l'invention est décrit en référence à la figure 1. Dans cette figure, le porte-filtre 1 d'une machine à café du type expresso a la forme d'une coupelle avec une chambre à infusion dans laquelle est placée un filtre à café 2. Ce filtre à café est connu dans l'état de la technique et peut prendre la forme d'un filtre réutilisable, généralement en métal, comme dans les machines plus couramment destinées à un usage professionnel, ou d'une capsule jetable, comme celles destinées plus couramment à un usage domestique. Ce filtre comporte en général, et de manière connue, une partie formant réceptacle 3 dans laquelle le café moulu est introduit et un fond 4 percé formant le filtre proprement dit et éventuellement recouvert par une membrane de tissu ou de papier, retenant le marc de café, mais laissant passer l'extrait de café liquide.

En dessous du filtre 2, on trouve une plaque mobile de fermeture 5 qui est pressée contre le fond percé 4 du filtre 2 par l'intermédiaire d'un moyen ressort 6. Ledit moyen ressort s'appuie quant à lui sur le fond de la chambre à infusion. La plaque mobile de fermeture 5 et le moyen ressort 6 sont maintenus à l'intérieur du porte-filtre au moyen d'une goupille 7 démontable.

Le fonctionnement du système selon l'invention est le suivant: de manière classique, l'eau chaude est introduite sous pression au moyen d'une pompe dans le filtre et mouille la mouture de café. La pression de liquide obtenue dans le porte-filtre est de l'ordre de 8 à 15 bar. Le fond 4 du filtre 2 étant percé, la pression à l'intérieur de filtre s'applique directement sur la plaque mobile de fermeture 5 contre le ressort 6. Lorsque la pression du liquide dans le filtre 2 est suffisante pour surmonter la force appliquée par le moyen ressort 6, la plaque mobile de fermeture 5 se déplace axialement vers le bas de la chambre à infusion.

La plaque mobile de fermeture 5, dans une première variante, a la forme d'un disque comme représenté à la figure 2. Le jeu entre le pourtour de la plaque de fermeture 5 et la chambre à infusion du porte-filtre 1 est de l'ordre de 3 à 5 centièmes de millimètres, voire plus. Dès que la plaque 5 se sera éloignée du fond 4 du filtre 2 en direction du fond de la chambre à infusion, l'extrait de café pourra s'échapper du filtre 2 en passant autour de la plaque et s'écoulera par l'écoulement 9 dans un récipient qui est placé en dessous du porte-filtre. Dans une variante schématisée à la figure 2 par les traits tiretés indiqués sur la surface de la plaque 5, celle-ci comporte au moins trois découpes 8 dans son pourtour, ces découpes 8 facilitant l'écoulement de l'extrait de café.

Contrairement aux systèmes connus, le système selon l'invention utilise un principe réversible de sorte qu'une pression minimale doit être maintenue dans le filtre 2 pour que l'extrait de café puisse s'écouler. Dès que la pression diminue, le ressort 6 ramène la plaque mobile 5 contre le filtre et l'écoulement de l'extrait de café cesse.

Le principe de l'invention effectue donc au moins un laminage de l'extrait de café en sortie du filtre ce qui a pour conséquence une production améliorée de mousse sur l'extrait de café recueilli par l'écoulement 9.

De préférence, la force de rappel du ressort est de l'ordre de 40 kilos. Bien entendu, cette valeur peut être variée si nécessaire. De même, la forme du ressort 6 n'est donnée qu'à titre d'exemple et d'autres ressorts restent dans le cadre du principe de la présente invention.

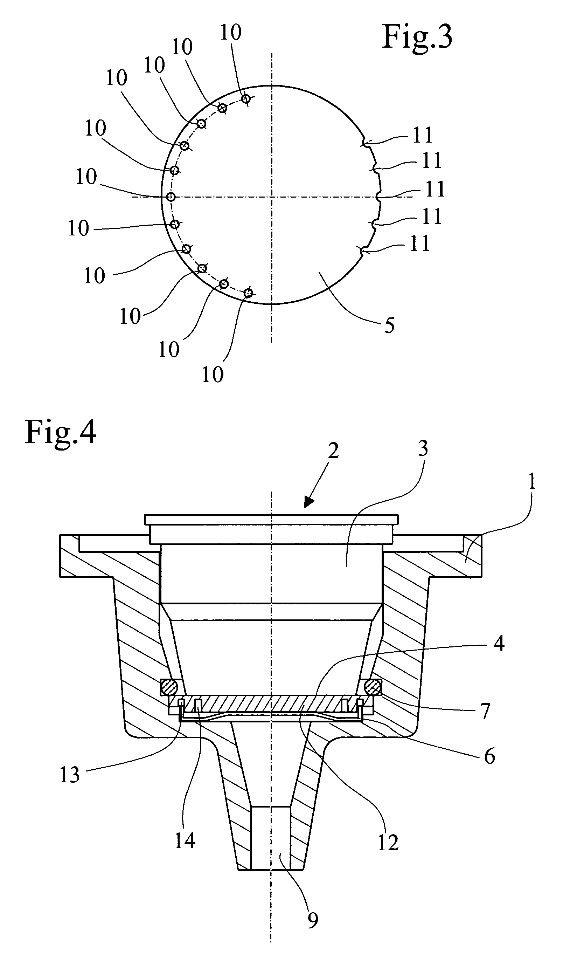

A titre d'exemple, la plaque mobile a la forme d'un disque comme représenté dans la figure 2, éventuellement avec trois découpes régulièrement espacées sur sa circonférence (schématisées par des traits tiretés). D'autres variantes de plaques mobiles sont possibles et sont représentées dans la figure 3.

Dans cette figure deux variantes possibles sont représentées sur chaque moitié de plaque mobile 5, ces variantes faisant appel à des moyens équivalents aux découpes 8 de la figure 2 . Dans la première variante (moitié gauche de la plaque 5), on a percé une série de trous 10 à proximité du bord extérieur de la plaque 5 qui permettent, comme les découpes 8, à l'extrait de café de s'échapper du filtre 2 quand la pression dans ledit filtre est suffisante. Ces trous 10 peuvent être des trous droits ou avoir la forme de venturi.

Sur la moitié droite de la plaque 5, des découpes 11 sont formées directement dans le bord extérieur de la plaque 5 et ont la même fonction que les trous 10, ou encore que les découpes 8 (figure 2). Ces découpes 11 peuvent avoir une dimension axiale constante, ou bien la forme de demi-venturi.

Dans la figure 4, une troisième variante de plaque mobile est représentée dans un porte-filtre 1 similaire à celui de la figure 1. Dans cette figure, les éléments identiques déjà décrits ont les mêmes références. Le porte-filtre 1 contient, dans une chambre à infusion, un filtre 2 (métallique ou capsule jetable) formé d'un réceptacle 3 ayant un fond percé 4, éventuellement recouvert d'une membrane filtre. En-dessous du filtre 3 se trouve une plaque mobile 12, pressée contre le fond 4 du filtre 3 par l'intermédiaire d'un ressort 6 s'appuyant sur le fond de la chambre à infusion. Le tout est maintenu en position au moyen de la goupille 7. Cette plaque 12, similaire aux plaques décrites dans les figures 2 et 3, comprend en outre deux rainures concentriques 13 et 14. Ces deux rainures créent une chute de pression dans l'extrait de café lorsque celui-ci passe de l'autre côté de la plaque 12, c'est-à-dire qu'une pression suffisante est atteinte dans le filtre 2, favorisant également la production d'une mousse de qualité dans l'extrait de café obtenu à la sortie de la chambre à infusion (écoulement 9).

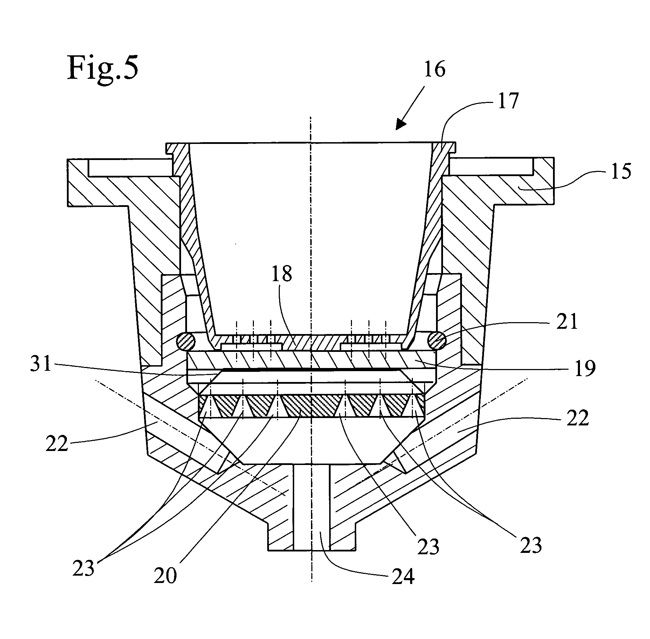

Un deuxième mode d'exécution de l'invention est décrit en référence à la figure 5. Le porte-filtre 15 a, de manière similaire au premier mode d'exécution, une chambre à infusion dans laquelle est placée un filtre à café 16. Ce filtre à café est connu dans l'état de la technique et peut prendre la forme d'un filtre en métal réutilisable, comme dans les machines destinées à un usage professionnel, ou d'une capsule jetable, comme celles destinées à un usage domestique. Ce filtre comporte en général, et de manière connue, une partie formant récipient 17 dans laquelle le café moulu est introduit et un fond 18 percé formant le filtre proprement dit et éventuellement recouvert par une membrane en tissu ou en papier, retenant le marc de café mais laissant passer l'extrait de café liquide. Ce filtre est similaire au filtre 2 décrit en combinaison avec le premier mode d'exécution du porte-filtre (figures 1 et 4).

En dessous du filtre 16, on trouve une plaque mobile de fermeture 19 qui est pressée contre le fond percé 18 du filtre 16 par l'intermédiaire d'un moyen ressort 31. Ledit moyen ressort 31 s'appuie quant à lui non pas sur le fond de la chambre à infusion, comme dans le premier mode d'exécution, mais sur une deuxième plaque 20 qui est fixe par rapport à la chambre à infusion. Les deux plaques 19, 20, et le moyen ressort 31 sont maintenus à l'intérieur du porte-filtre 15 au moyen d'une goupille 21. La partie inférieure du porte-filtre 15 comprend encore deux prises d'air 22. Le moyen ressort utilisé peut être similaire au ressort représenté dans les figures 1 et 4 par exemple.

La deuxième plaque comporte une pluralité d'ouvertures 23 qui ont, dans la figure 5, la forme de venturi. Dans ce mode d'exécution, comme dans le mode d'exécution précédent, il est nécessaire qu'une certaine pression soit atteinte dans le filtre pour que la plaque mobile 19 se déplace et permette l'évacuation de l'extrait de café. Celui-ci subit donc d'abord un premier laminage en sortie du filtre 16. Puis, grâce à la deuxième plaque 20 et les ouvertures 23, l'extrait de café subi une deuxième contrainte qui favorise la création de mousse sur l'extrait de café recueilli par l'écoulement 24 de la chambre à infusion.

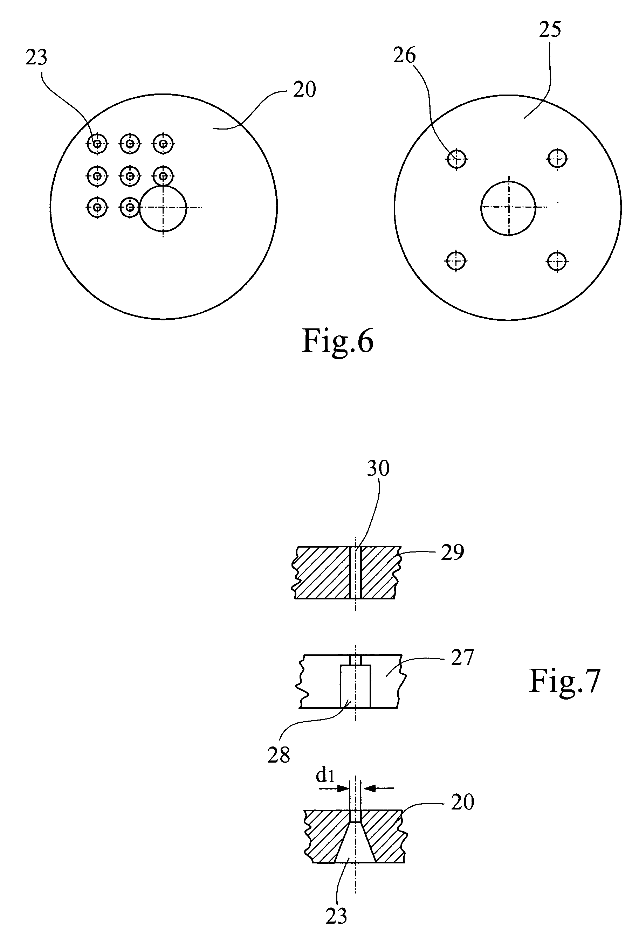

Deux variantes de la deuxième plaque sont représentées dans la figure 6. Dans la première variante, la plaque 20 correspond à celle représentée à la figure 5. Celle-ci comprend vingt quatre trous 23 répartis de façon régulière sur la plaque 20. Ces trous ont la forme de venturi. Dans la seconde variante, la plaque 25 comporte quatre trous 26 qui sont droits.

Comme indiqué, les trous de la deuxième plaque 20 peuvent avoir la forme de venturi 23 ou d'autres formes. Plusieurs variantes sont représentées dans la figure 7 à titre d'exemple non-limitatif. Dans le premier depuis le bas, c'est la plaque 20 avec des trous 23 en forme de venturi. A titre d'exemple, le petit diamètre d1 est de l'ordre de 0,4mm et le cône du venturi a une ouverture de 45°.

Dans le deuxième exemple, la plaque 27 a des trous 28 qui ont deux diamètres différents. A titre d'exemple, le petit diamètre est de l'ordre de 0,4 mm et le grand diamètre est de l'ordre de 1,5 mm.

Dans le troisième exemple, la plaque 29 a des trous 30 de diamètre constant, par exemple 0,4 mm. Ces différentes configurations peuvent bien entendu être combinées entre elles et la plaque peut comporter des trous de forme différents, comme ceux représentés à la figure 7.

La plaque mobile 19 peut avoir les mêmes formes que celles décrites en rapport avec le premier mode d'exécution de l'invention (voir les figures 1 à 4 et la description correspondante ci-dessus).

Les ressorts peuvent aussi avoir des formes diverses et variées, comme par exemple des rondelles ressort ou autres équivalents.

Les différentes variantes de plaques décrites ci-dessus peuvent, bien entendu, être combinées entre elles à volonté. De plus, des moyens de retenue équivalents aux goupilles 7 et 21 décrites ci-dessus peuvent être envisagés pour la même fonction.

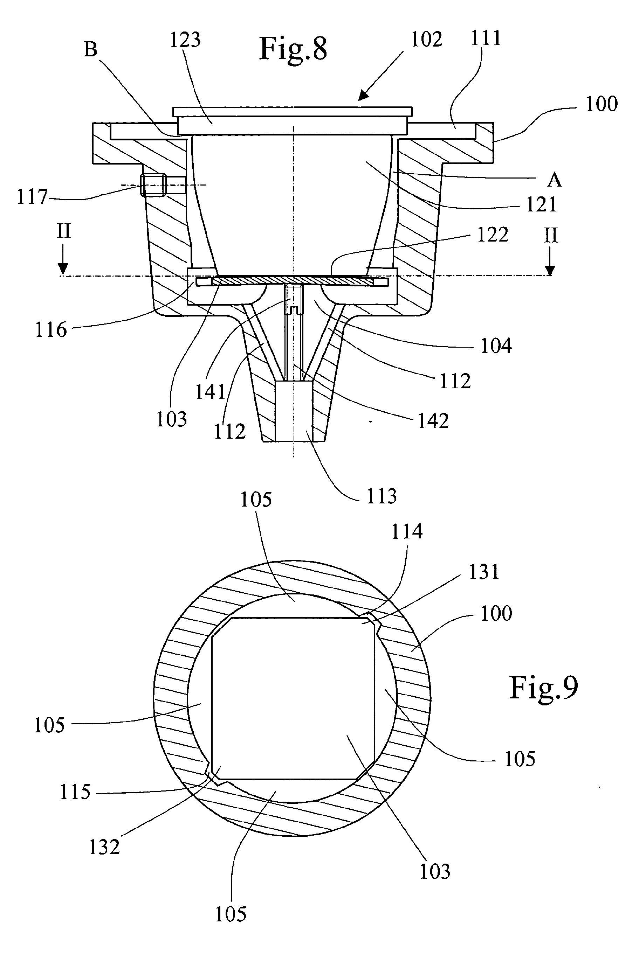

Dans le mode d'exécution de la figure 8, le porte-filtre 100 d'une machine à café du type express a une chambre à infusion dans laquelle est placée un filtre à café 102. Ce filtre à café est connu dans l'état de la technique et peut prendre la forme d'un filtre réutilisable, comme dans les machines plus couramment destinées à un usage professionnel, ou d'une capsule jetable, comme celles destinées plus couramment à un usage domestique. Ce filtre comporte en général, et de manière connue, une partie formant récipient 121 dans laquelle le café moulu est introduit et un fond 122 percé formant le filtre proprement dit et éventuellement recouvert par une membrane de tissu ou de papier notamment s'il s'agit d'une capsule retenant le marc de café, mais laissant passer l'extrait de café liquide. Il est important que l'enveloppe formant le récipient 121 soit faite d'un matériau déformable élastiquement pour que, d'une part, le filtre puisse être déformé par la compression que subira le filtre lors de la mise en place de l'ensemble porte-filtre 100 et filtre 102 dans la machine et, d'autre part, cette enveloppe puisse se déformer également dans le sens radial sous l'effet de la pression lors de l'introduction de l'eau chaude pour la confection du café comme il sera expliqué par la suite.

De même, il est très important qu'un jeu A existe entre la paroi latérale du récipient 121 et la chambre à infusion 100 ainsi qu'un jeu B entre un épaulement 123 de la partie supérieure du filtre 102 et une surface annulaire 111 du porte-filtre 100. En effet, ce jeu B sera effacé lors de la mise en place de l'ensemble dans la machine ce qui permettra également de créer un joint étanche entre la partie supérieure du porte-filtre 100 et la machine à café. Bien entendu si le filtre n'est pas muni d'un épaulement un joint d'étanchéité est prévu entre la machine et le porte-filtre.

Le fond de la chambre à infusion comprend une protubérance centrale 104 sur laquelle repose une plaque 103 laissant des passages 105 (figure 9) pour l'écoulement du café. Le fond de la chambre à infusion est muni de canaux 112 aboutissant à un écoulement 113 au bas du porte-filtre 100 à travers lequel passe l'extrait de café et bien sûr la mousse. Le fond du porte-filtre se termine également par une saignée 116 dont le diamètre est légèrement supérieur à celui de la une chambre à infusion du porte-filtre 100. La plaque 103 est munie de deux projections 131 et 132 (figure 9) qui viennent se loger à l'intérieur de ladite saignée 116 pour empêcher la sortie intempestive ou accidentelle de la plaque 103 du fond du porte-filtre. En effet, la plaque 103 n'est pas fixée sur la protubérance 104 mais elle est simplement posée et elle peut basculer, bien sûr dans certaines limites définies par les dimensions de la plaque 104 et de la saignée 116 pour les raisons qui seront expliquées par la suite.

Afin de pouvoir mettre en place la plaque 103, la une chambre à infusion est munie de deux fraisures 114 et 115 dont la position et la forme permettent de faire glisser la plaque 103 le long de ces fraisures qui sont utilisées comme guide pour les projections 131 et 132 de ladite plaque. Une fois que la plaque se trouve au fond, il suffit de la tourner de quelques degrés afin que la plaque ne puisse pas sortir de manière accidentelle. Lorsqu'on veut sortir la plaque pour nettoyer le porte-filtre, il suffit également de la tourner légèrement pour que les projections 131 et 132 viennent face aux fraisures 114 et 115 et la retirer, soit avec les doigts, soit avec un outil qui sera fourni avec l'ensemble, soit encore en retournant le porte-filtre.

La forme de la plaque 103, le nombre de projections utilisé et donc des fraisures n'est pas limité et peut varier selon la construction. On peut se limiter aussi à une seule projection et une seule fraisure. Il est également possible de prévoir d'autres manières de retenir la plaque 103 au fond de la chambre à infusion du porte-filtre 100 tout en lui permettant de basculer librement autour de la protubérance 104.

Selon une variante, il est prévu de pouvoir régler la position de la plaque 103 par rapport à la protubérance 104 au moyen, par exemple, d'une vis 141 logée dans un taraudage 142 ce qui permet de déplacer la plaque, par exemple vers le haut, ne serait-ce que pour régler la compression que subira le filtre lors de la mise en place de l'ensemble porte-filtre et filtre sur une machine.

Enfin, le porte-filtre peut être muni également d'une prise d'air 117 fermée par une soupape qui permet l'entrée de l'air pour régler la pression à l'intérieur de la chambre à infusion et faciliter l'écoulement du breuvage.

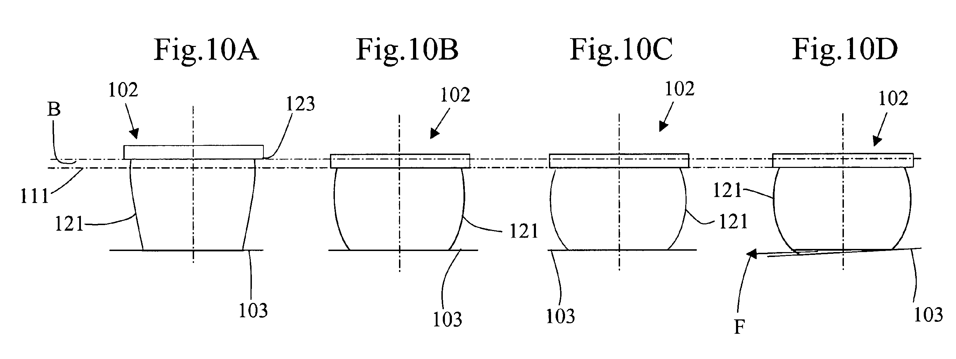

Nous expliquerons maintenant le fonctionnement de ce mode d'exécution à l'aide des figures 8 et 10A à 10D.

Après avoir disposé à l'intérieur du porte-filtre 100 le filtre 102 qui peut être soit une capsule, soit un filtre réutilisable, nous portons l'ensemble sur la machine du type expresso et lors de la mise en place (par exemple un système à baïonnette qui permet de serrer le porte-filtre contre la machine), le filtre 102 est poussé contre le porte-filtre 100 jusqu'à ce que l'épaulement 123 vienne s'appuyer sur la surface annulaire 111 du porte-filtre 100 créant ainsi un joint étanche et le filtre se déforme élastiquement par une déformation dans le sens radial de la périphérie du récipient 121.

A la figure 10A, on a illustré schématiquement le filtre 102 avec deux lignes en trait mixte illustrant la surface 111 du porte-filtre 100 et le jeu B existant avant la mise en place du porte-filtre et filtre dans la machine.

A la figure 10B, on a représenté la situation lorsque le porte-filtre est mis sur la machine et nous voyons que la surface latérale du filtre 102 a été déformée radialement sous l'effet de la compression, c'est-à-dire de l'écrasement de la capsule ou du filtre 102. Bien entendu, la plaque 103 ne peut pas se déplacer à l'intérieur de la chambre à infusion. Il est important que cet écrasement soit absorbé par cette déformation élastique de la paroi latérale du récipient 121 telle que représenté à la figure 10B.

A la figure 10C, le liquide chaud commence à couler sous une pression qui d'habitude est située entre 8 et 15 bars à l'intérieur du filtre ce qui augmente encore la déformation radiale du récipient 121. A un moment donné, sous l'effet de cette déformation radiale du récipient 121 et du fait que la pression au fond du récipient 121 n'est pas absolument symétrique fait que le fond du récipient 121 décolle légèrement de la plaque 103, ne serait-ce qu'à cause de la déformation de la surface latérale du filtre 102 ce qui fait basculer la plaque 103 autour de la protubérance 104 laissant ainsi échapper le liquide selon la flèche F. Ce basculement tel que représenté n'est qu'un exemple mais la plaque 103 peut basculer dans tous les sens en fonction de cette asymétrie créée par la pression et la déformation du filtre.

On lamine ainsi l'extrait de café en sortie du filtre par écrasement des molécules de graisse contenues dans le café, ce qui a pour conséquence une production améliorée de mousse sur l'extrait de café recueilli par la suite à travers les canaux 112 et l'écoulement 113. Dès que la pression intérieure du filtre diminue par le fait que le café commence à s'écouler, le filtre a tendance à revenir à sa forme initiale à cause du matériau déformable élastiquement ce qui fait que la plaque 103 revient à sa position initiale et dès que la pression augmente par le fait qu'il n'y a pas d'écoulement, un nouveau basculement du même côté ou d'un autre se produit et le liquide continue à s'écouler. Cette manière de faire permet de mouiller suffisamment le café pour créer une infusion qui a un bon goût et le laminage successif permet de former une mousse onctueuse et d'excellente qualité et tenue.

Selon la variante d'exécution où on a prévu une vis de réglage 141, on peut régler la position de la plaque 103 dans certaines limites pour justement augmenter ou diminuer la compression initiale à laquelle est soumise le filtre 102 lors de la mise en place sur une machine, ce qui a également un effet par la suite sur la valeur de la pression qui permettra de faire basculer la plaque 103 pour laisser échapper le café et la mousse.

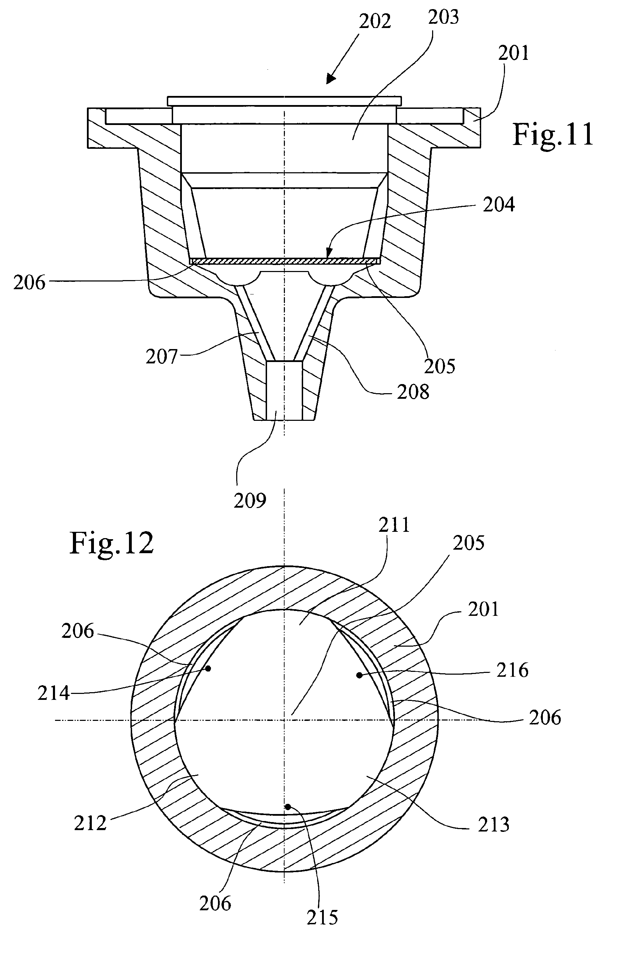

Dans le troisième mode d'exécution de la figure 11, le porte-filtre 201 d'une machine à café du type "expresso" a une chambre à infusion dans laquelle est placée un filtre à café 202. Ce filtre à café 202, qui forme un réceptacle à mouture de café, est connu dans l'état de la technique et peut prendre la forme d'un filtre réutilisable, généralement en métal, comme dans les machines plus couramment destinées à un usage professionnel, ou d'une capsule jetable, comme celles destinées plus couramment à un usage domestique. Ce filtre 202 comporte en général, et de manière connue, une partie formant récipient 203 dans laquelle le café moulu est introduit et un fond 204 percé formant le filtre proprement dit, éventuellement recouvert par une membrane de tissu ou de papier, retenant le marc de café, mais laissant passer l'extrait de café liquide.

En dessous du filtre 202, on trouve une plaque de fermeture 205 déformable qui est pressée contre le fond percé 204 du filtre 202 par l'intermédiaire d'une portée 206 taillée dans le fond de la chambre à infusion.

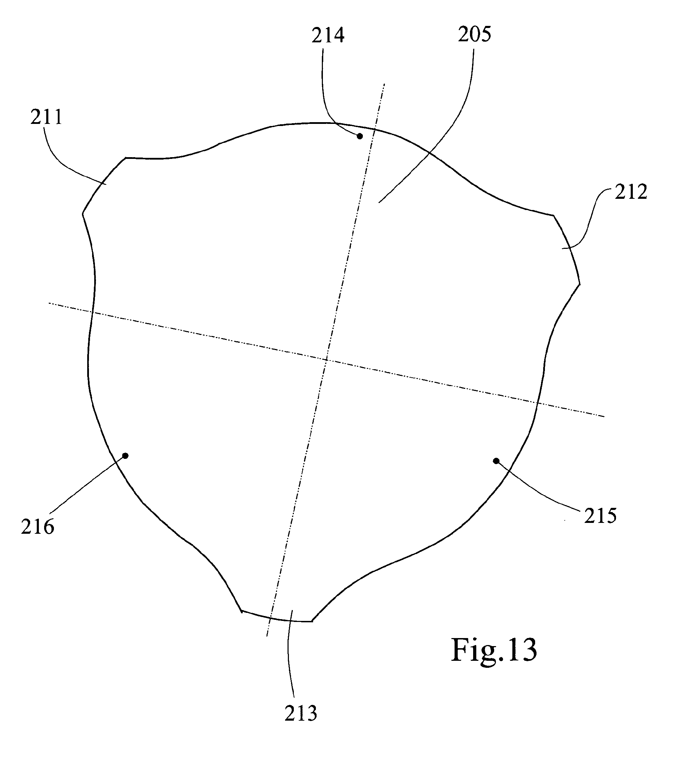

La plaque déformable est décrite plus en détail en référence aux figures 12 et 13. Dans la figure 12, un porte-filtre est représenté en coupe, vu de dessus mais sans filtre. Le porte-filtre 201 a une forme générale cylindrique dans lequel la plaque 205 est posée en appui sur la portée 206 qui, de préférence, s'étend sur tout le diamètre intérieur de la chambre à infusion.

La plaque 205 (figure 12 et 13) a la forme générale d'un disque et comporte, de préférence, trois projections latérales 211, 212 et 213 qui s'étendent dans le plan de la plaque 205. Ces projections 211, 212 et 213 sont de préférence formées en étant réparties de façon équidistante sur le pourtour de la plaque 205, par exemple tous les 120°, en considérant le milieu de chaque projection 211, 212 ou 213.

Le fonctionnement du système selon l'invention est le suivant: de manière classique, l'eau chaude est introduite sous pression au moyen d'une pompe de la machine à café dans le filtre et mouille la mouture de café. La pression de liquide obtenue dans la chambre à infusion est de l'ordre de 8 à 15 bar. Le fond 204 du filtre 202 étant percé, la pression à l'intérieur du filtre 202 s'applique directement sur la plaque 205, celle-ci étant plaquée contre le fond 204 de la chambre à infusion par la portée 206 sur laquelle s'appuient les projections 211, 212 et 213 de la plaque 205.

Lorsque la pression du liquide dans le filtre 202 est suffisante, la plaque 205 se déforme de manière élastique vers le bas du porte-filtre 201, et le café s'écoule par les zones 214, 215 et 216 qui se situent entre les projections 211, 212 et 213. De préférence, la pression de fonctionnement du système est alors de l'ordre de 13 bar environ.

Cette déformation permet alors l'écoulement du café entre la plaque 205 et le fond 204 de la chambre à infusion, puis dans les canaux 207, 208 et l'écoulement 209 pour finir dans un récipient (non représenté), comme une tasse.

Le principe de l'invention effectue donc au moins un laminage du café en sortie du filtre par écrasement des molécules de graisse contenues dans le café, ce qui a pour conséquence une production améliorée de mousse sur l'extrait de café recueilli par les canaux 7, 8 et l'écoulement 9.

Contrairement aux systèmes connus, le système selon l'invention utilise un principe réversible de sorte qu'une pression minimale doit être maintenue dans le filtre 202 pour que le café puisse s'écouler. Dès que la pression diminue, la plaque 205 se redresse contre le filtre 202 et l'écoulement de café cesse.

De préférence, la force de rappel de la plaque 205 est de l'ordre de 40 kilos. Bien entendu, cette valeur peut être variée si nécessaire. La plaque 205 peut être faite en toute matière déformable selon le principe de l'invention et acceptable pour ce type d'applications. A titre d'exemple, on peut utiliser une plaque de 1 mm d'épaisseur en anticorrodal.

Le porte-filtre peut être un élément indépendant qui se montre sur une machine à café, par exemple par un système à baïonnette, ou il peut également être intégré dans une machine à café pour former un système entièrement automatique.

## Revendications

1. Porte-filtre à café ayant une chambre à infusion dont le fond comporte une ouverture permettant l'écoulement de l'extrait de café, et avec un filtre (2) pour le café ayant un fond percé (4), **caractérisé en ce que** la chambre à infusion comporte au moins:
-) des moyens de fermeture du fond;
-) des moyens de support coopérant avec lesdits moyens de fermeture du fond de façon à permettre le retrait desdits moyens de fermeture et l'écoulement de l'extrait de café lorsqu'une pression déterminée est atteinte dans le filtre.

2. Porte-filtre selon la revendication 1, **caractérisé en ce que** lesdits moyens mobiles de fermeture comprennent une première plaque (5) mobile coopérant avec au moins un élément ressort (6;31).

3. Porte-filtre selon l'une des revendications précédentes, **caractérisé en ce que** la première plaque (5) comporte au moins une ouverture (8;10;11).

4. Porte-filtre selon la revendication précédente, **caractérisé en ce que** la première plaque (5) comprend plusieurs ouvertures (8;10;11) réparties sur sa circonférence.

5. Porte-filtre selon l'une des revendications 2 à 4, **caractérisé en ce qu'**il comprend une deuxième plaque (20;25;27;29) comportant au moins une ouverture (23,26,28,30), ledit moyen de pression (31) agissant entre ladite deuxième plaque et ladite première plaque.

6. Porte-filtre selon l'une des revendications précédentes, **caractérisé en ce que** les ouvertures (23) ont une forme de venturi.

7. Porte-filtre selon la revendication 2 ou 3, **caractérisé en ce que** la plaque (12) comporte au moins une rainure concentrique (13,14) sur sa face opposée au réceptacle à café (2;16).

8. Porte-filtre selon la revendication 1, **caractérisé en ce que** lesdits moyens de fermeture sont formés par une plaque déformable (103, 205), et les moyens de support sont formés par une portée dans la chambre à infusion.

9. Porte-filtre selon la revendication 8, **caractérisé en ce que** ladite portée est une protubérance centrale (104).

10. Porte-filtre selon la revendication 8 on 9, **caractérisé en ce que** ladite plaque (103) comprend au moins une projection (131, 132) venant se loger dans une saignée annulaire (116) située dans le fond de la chambre à infusion, ladite saignée ayant un diamètre supérieur au diamètre de la chambre à infusion de sorte à empêcher que la plaque (103) quitte le fond de la chambre à infusion accidentellement.

11. Porte-filtre selon la revendication 10, **caractérisé en ce que** la chambre à infusion comprend au moins une fraisure (114, 115) longitudinale sur sa surface intérieure dont les dimensions et la forme correspondent à celles de la projection (131, 132) de ladite plaque (103) afin de permettre la mise en place de la plaque au fond de la chambre à infusion.

12. Porte-filtre selon l'une des revendications 9 à 11, **caractérisé en ce que** des moyens sont prévus (141) pour permettre de régler la position de la plaque (103) dans le sens de la hauteur de la chambre à infusion.

13. Porte-filtre selon la revendication 8, **caractérisé en ce que** ladite plaque déformable comprend au moins deux projections latérales (211,212,213).

14. Porte-filtre selon la revendication 8, **caractérisé en ce que** la plaque (205) comprend trois projections latérales (211,212,213) réparties de façon équidistante sur la périphérie de la plaque (205) et s'appuyant sur la portée (206) de la chambre à infusion.

15. Porte-filtre selon l'une des revendications précédentes, **caractérisé en ce que** le réceptacle à café est une capsule ou un filtre réutilisable ou une dose de café préconditionnée.

16. Porte-filtre selon la revendication 15, **caractérisé en ce que** la capsule est déformable élastiquement.

17. Machine à café **caractérisée par** un porte-filtre selon l'une des revendications précédentes.
